# EUROPEAN PATENT APPLICATION

(11) **EP 2 953 309 A1**
(43) Date of publication of application: **09.12.2015**
(21) Application number: 13873923.0
(22) Date of filing: 06.09.2013
(51) Int. Cl.: H04L 29/06

(54) **METHOD, SYSTEM, AND RCS-E SERVER FOR DETERMINING TERMINAL STATE**

(30) Priority: 04.02.2013 CN 201310043416
(71) Applicant: ZTE Corporation, Shenzhen City, Guangdong Province 518057, (CN)
(72) Inventor: JIANG, Yuzhi, Shenzhen Guangdong Province 518057 (CN); LIN, Hai, Shenzhen Guangdong Province 518057 (CN); ZHANG, Shaolin, Shenzhen Guangdong Province 518057 (CN); LU, Jianfeng, Shenzhen Guangdong Province 518057 (CN)
(74) Representative: Novagraaf Technologies
(86) International application number: PCT/CN2013/083076
(87) International publication number: WO 2014/117515

(57) **Abstract**

Provided are a method and system for judging a terminal state, and an RCS-e server. The method includes: a first terminal sending a request for querying a state of a second terminal to an RCS-e server through a core network; the RCS-e server querying the current state of a second terminal according to the request for querying the state of the second terminal; and when a query result is that the current state of the second terminal is an offline RCS-e service terminal or a non-RCS-e service terminal, the RCS-e server feeding back the query result to the first terminal. The method, system, and RCS-e server provided enable the first terminal to know the exact state of the second terminal in real time, so that the user of the first terminal decides, according to the current state of the second terminal, whether to perform subsequent communication operation with the second terminal, thereby effectively preventing a wrong decision being made because the user of the first terminal cannot know the exact current state of the second terminal.

## Description

### Technical field

The present disclosure relates to the technical field of communications, and in particular, to a method and system for judging a terminal state, and a Rich Communication Suite-e* (RCS-e) server.

### Background

An IP multimedia subsystem (IMS) is an architecture framework for providing an Internet protocol (IP) multimedia service. A Rich Communication Suite-e* (RCS-e) is a new upgrade version of a Rich Communication Suite (RCS) specification which is used based on an IP multimedia subsystem technology network. The RCS-e can enable a client to use enhancement-type communication services in a mobile network in a more simple and explicit manner.

With the RCS-e, a client can use instant messaging and share files such as on-line videos and pictures, etc. while calling, without any restrictions on network and device. The RCS-e enables a user to communicate in a very natural manner, like today's GSM voice and text information.

Since an address book of a client is open, a user can check what kind of communication service is used by an opposite end user; and thus the user can select a communication manner favourable to both parties to perform communications. For example, a user client can check whether an opposite end user is capable of using the 3G network, or whether opposite end user is capable of receiving a video. The client can benefit from the enhancement-type experience without needing to download any other software or adding technical configurations to a mobile phone.

However, when a user checks a state of an opposite end user in the RCS-e service of the related art, the user usually adopts practice in the GSMA specification; but according to the practice in the present GSMA, two wrong scenarios as follows may be generated, thus bringing wrong communications.

Scenario I: if a terminal 2 is an RCS-e service user and is online, a terminal 1 displays various RCS-e capabilities of the terminal 2; when the terminal 2 becomes off line, after receiving a 480 message, the terminal 1 displays that the terminal 2 is offline according to the GSMA specification, and displays various capabilities of the terminal 2, such as an off-line message entry; and the terminal 1 can send an off-line message to the terminal 2, and the terminal 2 can receive the off-line message after the terminal is on line again. However, after the terminal 2 is off line, the terminal may have already closed the account in the RCS-e service system, in this case, the terminal 1 still displays that the terminal 2 is in a off-line state; and on this occasion, the message sent by the terminal 1 can never reach the terminal 2.

Scenario II: the terminal 2 is not an RCS-e service user; and a terminal 1 queries a state of this terminal, and displays, after obtaining 480, that the terminal 2 is a non-RCS-e service user according to the GSMA specification. However, the terminal 2 opens an RCS-e service later, but is not on line at the same time with the terminal 1, rendering that the terminal 1 cannot know the account opening state of the terminal 2, and therefore, the terminal 1 cannot send an off-line message to the terminal 2.

### Summary

The present disclosure provides a method, a system, and an RCS-e server for judging a terminal state, which enable a terminal user to precisely know a current state of an opposite end, thereby preventing a wrong decision being made because the terminal user cannot precisely know the current state of an opposite end.

An embodiment of the present disclosure proposes a method for judging a terminal state, including:
querying, by an RCS-e server, a current state of a second terminal according to a request for querying the state of the second terminal sent by a first terminal; and
when a query result is that the current state of the second terminal is an off-line RCS-e service terminal or a non-RCS-e service terminal, feeding back the query result to a first terminal.

In an example embodiment, feeding back, by the RCS-e server, the query result to the first terminal includes:
sending, by the RCS-e server, the query result to the first terminal through a core network.

In an example embodiment, in the method for judging the terminal state, when the query result is that the current state of the second terminal is an on-line RCS-e service terminal, then the RCS-e server forwards the request for querying the state of the second terminal to the second terminal through a core network, to enable the second terminal to feed back, according to the request for querying the state of the second terminal, information about the current state of the second terminal to the first terminal.

Another embodiment of the present disclosure proposes an RCS-e server, including:
a query component configured to query a current state of a second terminal according to a request for querying a state of the second terminal sent by a first terminal; and
a feedback component configured to feed back a query result to the first terminal when the query result is that the current state of the second terminal is an off-line RCS-e service terminal or a non-RCS-e service terminal.

In an example embodiment, the feedback component is configured to send the query result to the first terminal through a core network.

In an example embodiment, the RCS-e server further includes:
a forwarding component configured to forward the request for querying the state of the second terminal to the second terminal through the core network when the query result is that the current state of the second terminal is an on-line RCS-e service terminal, to enable the second terminal to feed back, according to the request for querying the state of the second terminal, information about the current state of the second terminal to the first terminal.

Another embodiment of the present disclosure proposes a system for judging a terminal state, including:
a first terminal configured to send a request for querying a state of a second terminal to a core network;
the core network configured to send the request for querying the state of the second terminal to an RCS-e server; and
the RCS-e server configured to query a current state of the second terminal according to the request for querying the state of the second terminal, and feed back a query result to the first terminal when the query result is that the current state of the second terminal is an off-line RCS-e service terminal or a non-RCS-e service terminal.

In an example embodiment, the RCS-e server is further configured to send the query result to the core network;
and the core network is further configured to send the query result to the first terminal.

In an example embodiment, the RCS-e server is further configured to forward the request for querying the state of the second terminal to the second terminal through the core network when the query result is that the current state of the second terminal is an on-line RCS-e service terminal; and
the second terminal is configured to feed back, according to the request for querying the state of the second terminal, information about the current state of the second terminal to the first terminal.

In an example embodiment, the second terminal is further configured to feed back, according to the request for querying the state of the second terminal, the information about the current state of the second terminal to the core network;
the core network is further configured to forward the information about the current state of the second terminal to the RCS-e server;
the RCS-e server is further configured to forward the information about the current state of the second terminal to the core network; and
the core network is further configured to forward the information about the current state of the second terminal to the first terminal.

The method, system and RCS-e server provided by the embodiments of the present disclosure adopt a manner that a first terminal sends a request for querying a current state of a second terminal to an RCS-e server through a core network, and the RCS-e server queries the current state of the second terminal according to the request for query the current state of the second terminal, which enables the first terminal to precisely know the state of the second terminal in real time, so that the user of the first terminal can decide, according to the current state of the second terminal, whether to perform a communication operation with the second terminal subsequently, thereby effectively preventing a wrong decision being made because the user of the first terminal cannot precisely know the current state of the second terminal.

### Description of the accompanying drawings

Fig. 1 is a flowchart of an embodiment of a method for judging a terminal state of the present disclosure;
Fig. 2 is a structural schematic diagram of an embodiment of an RCS-e server of the present disclosure;
Fig. 3 is another structural schematic diagram of the RCS-e server embodiment of the present disclosure;
Fig. 4 is a structural schematic diagram of an embodiment of a system for judging a terminal state of the present disclosure;
Fig. 5 is a structural schematic diagram of an example of the system for judging a terminal state of the present disclosure; and
Fig. 6 is a flowchart of an example for judging a terminal state of the present disclosure.

Objectives and advantages related to the present disclosure will be illustrated in the subsequent descriptions and appended drawings.

### Detailed description of the embodiments

It should be understood that specific embodiments described here are only used for illustrating the present disclosure and not intended to limit the present disclosure.

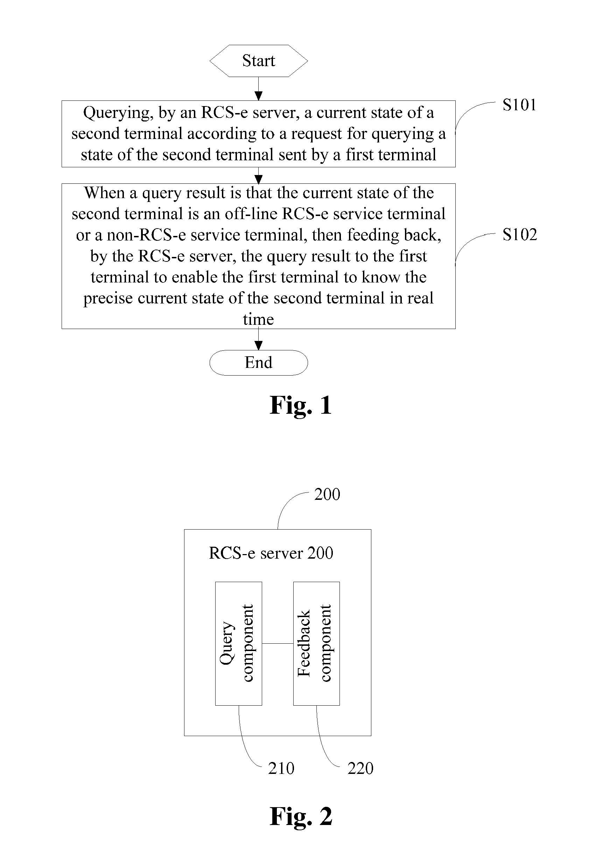

Referring to Fig. 1, a method for judging a terminal state of an embodiment of the present disclosure is proposed, including:

Step S101, an RCS-e server queries a current state of a second terminal according to a request for querying a state of the second terminal sent by a first terminal; and

Step S102, the RCS-e server feeds back a query result to the first terminal to enable a user of the first terminal to precisely know the current state of the second terminal when a query result is that the current state of the second terminal is an off-line RCS-e service terminal or a non-RCS-e service terminal.

In the method for judging a terminal state provided by the present embodiment, since the current state of the second terminal is queried by the RCS-e server and the query result is precise, the first terminal is enabled to precisely know the state of the second terminal in real time, so that the user of the first terminal can decide, according to the current state of the second terminal, whether to perform a communication operation with the second terminal subsequently, thereby effectively preventing a wrong decision being made because the user of the first terminal cannot precisely know the current state of the second terminal.

Preferably, in the above-mentioned embodiment of the method for judging a terminal state, the RCS-e server may feed back the query result to the first terminal specifically in the following manner: the RCS-e server may send the query result to the first terminal through a core network. That is to say, the RCS-e server sends the query result to a core network; and then the core network sends the query result to the first terminal to enable the user of the first terminal to precisely know the current state of the second terminal in real time.

Preferably, in the above-mentioned embodiment of the method for judging the terminal state, when the query result is that the current state of the second terminal is an on-line RCS-e service terminal, the RCS-e server forwards the request for querying the state of the second terminal to the second terminal through a core network, to enable the second terminal to feed back, according to the request for querying the state of the second terminal, information about the current state of the second terminal to the first terminal.

In the above-mentioned embodiment of the method for judging a terminal state, the process of feeding back, by the second terminal according to the request for querying the state of the second terminal, the information about the current state of the second terminal to the first terminal may be implemented as follows: the second terminal may feed back, according to the request for querying the state of the second terminal, the information about the current state of the second terminal to a core network. The core network forwards the information about the current state of the second terminal to the RCS-e server. The RCS-e server forwards the information about the current state of the second terminal to the first terminal through the core network to enable the user of the first terminal to precisely know the current state of the second terminal in real time.

Referring to Fig 2, an embodiment of the present disclosure proposes an RCS-e server 200, including: a query component 210 and a feedback component 220. The query component 210 is configured to query a current state of a second terminal according to a request for querying a state of the second terminal sent by a first terminal. The feedback component 220 is configured to feed back a query result to a first terminal when the query result is that the current state of the second terminal is an off-line RCS-e service terminal or a non-RCS-e service terminal to enable the user of the first terminal to precisely know the current state of the second terminal.

The RCS-e server 200 provided by the present embodiment queries a current state of a second terminal through the RCS-e server 200 and the query result is precise, which enables the first terminal to precisely know the state of the second terminal in real time, so that the user of the first terminal decides, according to the current state of the second terminal, whether to perform a communication operation with the second terminal subsequently, thereby effectively preventing a wrong decision being made because the user of the first terminal cannot precisely know the current state of the second terminal.

In an example embodiment, in the above-mentioned embodiment of the RCS-e server 200, the feedback component 220 is specifically configured to send the query result to the first terminal through the core network. The feedback component 220 may send the query result to the first terminal through the core network according to the following processing procedure: the feedback component 220 may be configured to send the query result to a core network; and then the core network may be configured to send the query result to the first terminal to enable the user of the first terminal to precisely know the current state of the second terminal in real time.

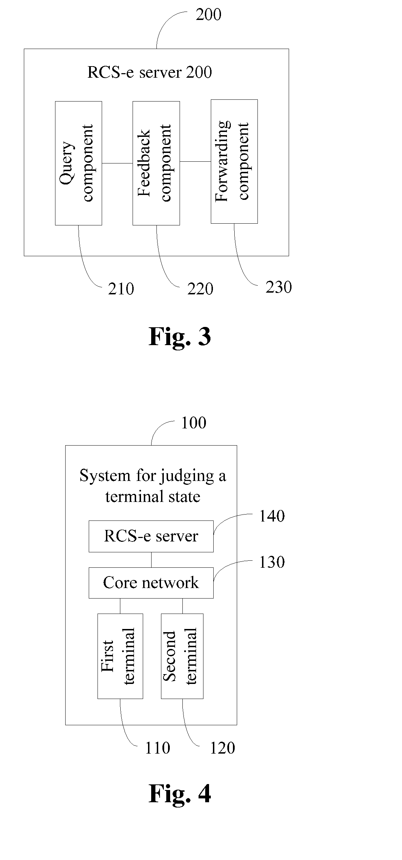

In an example embodiment, referring to Fig. 3, the above-mentioned embodiment of the RCS-e server 200 may further include: a forwarding component 230. The forwarding component 230 is configured to forward the request for querying the state of the second terminal to the second terminal through the core network when the query result is that the current state of the second terminal is an on-line RCS-e service terminal, to enable the second terminal to feed back, according to the request for querying the state of the second terminal, information about the current state of the second terminal to the first terminal.

The second terminal may feed back, according to the request for querying the state of the second terminal, the information about the current state of the second terminal to the first terminal according to the following processing procedure: the second terminal may feed back, according to the request for querying the state of the second terminal, the information about the current state of the second terminal to the core network; the core network may forward the information about the current state of the second terminal to the RCS-e server; and the RCS-e server may forward the information about the current state of the second terminal to the first terminal through the core network to enable the user of the first terminal to precisely know the current state of the second terminal in real time.

Referring to Fig. 4, an embodiment of the present disclosure proposes a system 100 for judging a terminal state, including a first terminal 110, a second terminal 120, a core network 130 and an RCS-e server 140. The first terminal 110 is configured to send a request for querying a state of a second terminal 120 to the core network 130. The core network 130 is configured to send the request for querying the state of the second terminal 120 to the RCS-e server 140. The RCS-e server 140 is configured to query a current state of the second terminal 120 according to the request for querying the state of the second terminal 120, and feed back a query result to the first terminal 110 when the query result is that the current state of the second terminal 120 is an off-line RCS-e service terminal or a non-RCS-e service terminal, to enable the user of the first terminal 110 to precisely know the current state of the second terminal 120.

In the system for judging a terminal state provided by the present embodiment, since the current state of the second terminal 120 is queried by the RCS-e server 140 and the query result is precise, the first terminal 110 is enabled to precisely know the state of the second terminal 120 in real time, so that the user of the first terminal 110 can decide, according to the current state of the second terminal 120, whether to perform a communication operation with the second terminal 120 subsequently, thereby effectively preventing a wrong decision being made because the user of the first terminal 110 cannot precisely know the current state of the second terminal 120.

Preferably, in the above-mentioned embodiment of the system 100 for judging a terminal state, the RCS-e server 140 is further configured to send the query result to the core network 130. The core network 130 is further configured to send the query result to the first terminal 110.

Preferably, in the above-mentioned embodiment of the system 100 for judging a terminal state, the RCS-e server 140 is further configured to forward the request for querying the state of the second terminal 120 to the second terminal 140 through the core network 130 when the query result is that the current state of the second terminal 120 is an on-line RCS-e service terminal 140. The second terminal 140 is configured to feed back information about the current state of the second terminal to the first terminal 110 according to the request for querying the state of the second terminal 120 to enable the user of the first terminal 110 to precisely know the current state of the second terminal 120 in real time.

Preferably, in the above-mentioned embodiment of the system 100 for judging a terminal current state, the second terminal 120 is further configured to feed back the information about the current state of the second terminal 120 to the core network 130 according to the request for querying the state of the second terminal 120. The core network 130 is further configured to forward the information about the current state of the second terminal 120 to an RCS-e server 140. The RCS-e server 140 is further configured to forward the information about the current state of the second terminal 120 to the core network 130. The core network 130 is further configured to feed back the information about the current state of the second terminal 120 to the first terminal 110, to enable the user of the first terminal 110 to precisely know the current state of the second terminal 120 in real time.

The method and system for judging a terminal state provided by the embodiments of the present disclosure is further described through a specific example in the following.

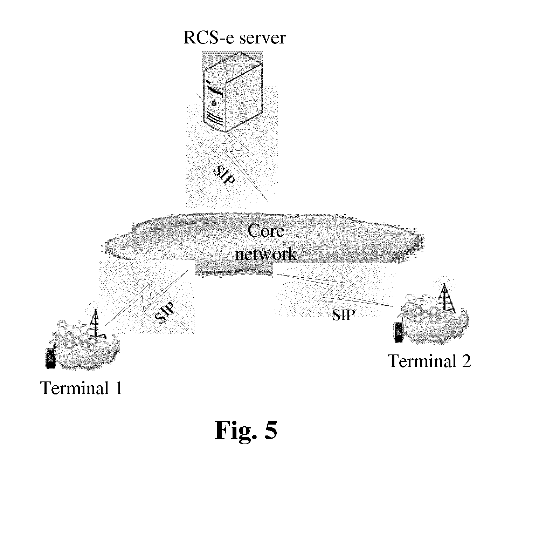

Referring to Fig. 5, a system for judging a terminal state provided by the present example includes a terminal 1, a terminal 2, a core network and an RCS-e server. When a user of the terminal 1 intends to send RCS-e service data to the terminal 2 through the terminal 1, a current state of the terminal 2 needs to be determined first.

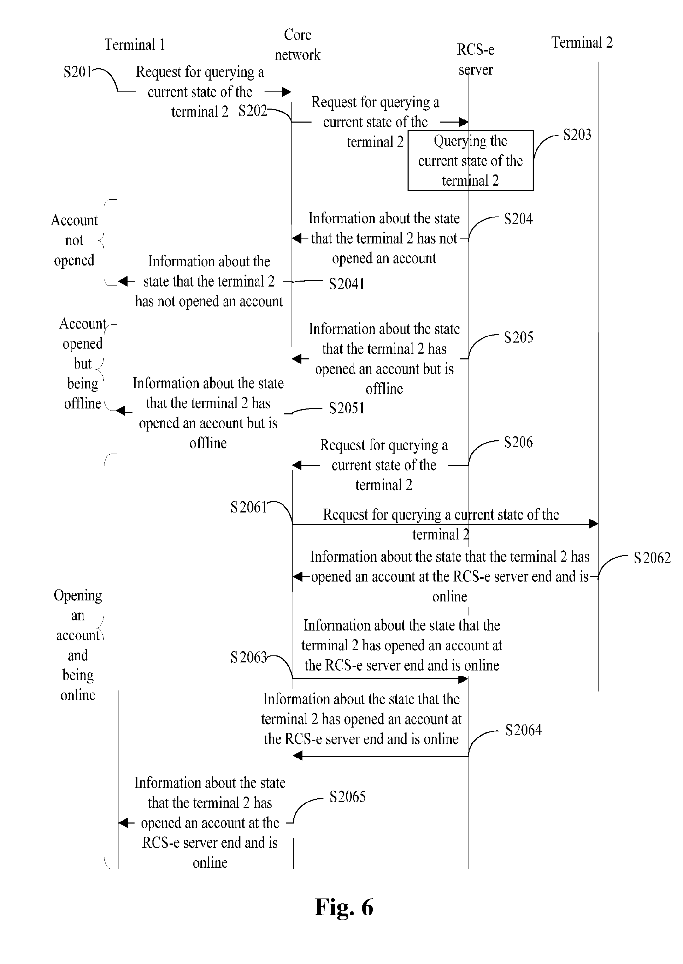

Referring to Fig. 6, the processing flow for determining a current state of the terminal 2 is described as follows:

Step S201, the terminal 1 initiates, through an OPTION, a request for querying a current state of the terminal 2 to a core network;

Step S202, the core network sends the request for querying the current state of the terminal 2 to an RCS-e server;

Step S203, the RCS-e server queries the current state of the terminal 2 according to the request for querying the current state of the terminal 2; when a querying result is that the terminal 2 has not opened an account, proceed to Step S204; when the querying result is that the terminal 2 has opened an account but is not online, then proceed to Step S205; and when the querying result is that the terminal 2 has opened an account and is online, then proceed to Step S206;

Step S204, the RCS-e server feeds back information about the state that terminal 2 has not opened an account to the core network, i.e. the terminal 2 is a non-RCS-e service terminal;

Step S2041, the core network forwards the information about the state that the terminal 2 has not opened an account to the terminal 1, so that the terminal 1 knows that the terminal 2 has not opened an account on the RCS-e server end;

Step S205, the RCS-e server feeds back the information about a state that the terminal 2 has opened an account but is offline to the core network, i.e. information about the state that the terminal is an off-line RCS-e service terminal;

Step S2051, the core network forwards the information about the state that the terminal 2 has opened an account but is offline to the terminal 1, so that the terminal 1 knows that the terminal 2 has opened an account on the RCS-e server end, but is in an off-line state;

Step S206, the RCS-e server forwards the request for querying the current state of the terminal 2 to the core network;

Step S2061, the core network forwards the request for querying the current state of the terminal 2 to the terminal 2;

Step S2062, according to the request for query the state of the terminal 2, the terminal 2 feeds back the information about the state that the terminal 2 has opened an account on the RCS-e server end, and is online to the core network;

Step S2063, the core network forwards the information about the current state of the terminal 2 to the RCS-e server;

Step S2064, the RCS-e server forwards the information about the current state of the terminal 2 to the core network; and

Step S2065, the core network forwards the information about the current state of the terminal 2 to the terminal 1, so that the terminal 1 knows that the terminal 2 has opened an account on the RCS-e server end, and is online.

It can be seen from the specific example provided above that the terminal 1 can precisely know the current state of the terminal 2, and a user of the terminal 1 can determine whether to perform a subsequent communication operation with the terminal 2 according to the current state of the terminal 2.

### Industrial applicability

It may be seen from the above description that in the method and system for judging a terminal state, and the RCS-e server provided in the embodiments of the present disclosure enable a first terminal to precisely know the state of a second terminal in real time by means of an RCS-e server querying a current state of a second terminal according to the request for querying a state of the second terminal, and thus the user of the first terminal can decide, according to the current state of the second terminal, whether to perform a communication operation with the second terminal subsequently, thereby effectively preventing a wrong decision being made because the user of the first terminal cannot precisely know the current state of the second terminal, efficiently improving user experience, enhancing the achievable rate of information from another point of view, and having relatively high industrial applicability.

It is certainly to be understood that the above is only the example embodiments of the present disclosure, and is not intended to limit the present disclosure. Any equivalent replacements of the structure or the flow based on the contents of the specification and drawings of the present disclosure, or direct or indirect application of the equivalent replacements in other related technical fields shall fall within the scope of protection defined by the claims of the disclosure.

## Claims

1. A method for judging a terminal state, **characterized by** comprising:
querying, by a Rich Communication Suite-e*, RCS-e, server, a current state of a second terminal according to a request for querying a state of the second terminal sent by a first terminal; and
when a query result is that the current state of the second terminal is an off-line RCS-e service terminal or a non-RCS-e service terminal, then feeding back the query result to the first terminal.

2. The method for judging a terminal state according to claim 1, **characterized in that** feeding back, by the RCS-e server, the query result to the first terminal comprises:
sending, by the RCS-e server, the query result to the first terminal through a core network.

3. The method for judging a terminal state according to claim 1 or 2, **characterized in that** when the query result is that the current state of the second terminal is an on-line RCS-e service terminal, then the RCS-e server forwards the request for querying the state of the second terminal to the second terminal through a core network, to enable the second terminal to feed back, according to the request for querying the state of the second terminal, information about the current state of the second terminal to the first terminal.

4. The method for judging a terminal state based on an RCS-e service according to claim 3, **characterized in that** feeding back, by the second terminal according to the request for querying the state of the second terminal, the information about the current state of the second terminal to the first terminal comprises:
feeding back, by the second terminal according to the request for querying the state of the second terminal, the information about the current state of the second terminal to the core network;
forwarding, by the core network, the information about the current state of the second terminal to the RCS-e server; and
forwarding, by the RCS-e server, the information about the current state of the second terminal to the first terminal through the core network.

5. A Rich Communication Suite-e*, RCS-e, server, **characterized by** comprising:
a query component configured to query a current state of a second terminal according to a request for querying a state of the second terminal sent by a first terminal; and
a feedback component configured to feed back a query result to the first terminal when the query result is that the current state of the second terminal is an off-line RCS-e service terminal or a non-RCS-e service terminal.

6. The RCS-e server according to claim 5, **characterized in that**
the feedback component is configured to send the query result to the first terminal through a core network.

7. The RCS-e server according to claim 5 or 6, **characterized by** further comprising:
a forwarding component configured to forward the request for querying the state of the second terminal to the second terminal through a core network when the query result is that the current state of the second terminal is an on-line RCS-e service terminal, to enable the second terminal to feed back, according to the request for querying the state of the second terminal, information about the current state of the second terminal to the first terminal.

8. A system for judging a terminal state, **characterized by** comprising:
a first terminal configured to send a request for querying a state of a second terminal to a core network;
a core network configured to send the request for querying the state of the second terminal to a Rich Communication Suite-e*, RCS-e, server; and
the RCS-e server configured to query a current state of the second terminal according to the request for querying the state of the second terminal, and feed back a query result to the first terminal when the query result is that the current state of the second terminal is an off-line RCS-e service terminal or a non-RCS-e service terminal.

9. The system for judging a terminal state according to claim 8, **characterized in that**
the RCS-e server is further configured to send the query result to the core network; and
the core network is further configured to send the query result to the first terminal.

10. The system for judging a terminal state according to claim 8 or 9, **characterized in that**
the RCS-e server is further configured to forward the request for querying the state of the second terminal to the second terminal through the core network when the query result is that the current state of the second terminal is an on-line RCS-e service terminal; and
the second terminal is configured to feed back, according to the request for querying the state of the second terminal, information about the current state of the second terminal to the first terminal.

11. The system for judging a terminal state according to claim 10, **characterized in that**
the second terminal is further configured to feed back, according to the request for querying the state of the second terminal, the information about the current state of the second terminal to the core network;
the core network is further configured to forward the information about the current state of the second terminal to the RCS-e server;
the RCS-e server is further configured to forward the information about the current state of the second terminal to the core network; and
the core network is further configured to forward the information about the current state of the second terminal to the first terminal.
